# EUROPÄISCHE PATENTSCHRIFT

(11) **EP 0 610 549 B1**
(45) Veröffentlichungstag und Bekanntmachung des Hinweises auf die Patenterteilung: **23.07.1997**
(21) Anmeldenummer: 93116492.5
(22) Anmeldetag: 12.10.1993
(51) Int. Cl.: G01G 21/00, E05F 1/12

(54) **Oberschalige Präzisionswaage mit einem Windschutz**
Top-loading precision balance with a wind protection
Balance de précision à plateaux supérieurs avec une protection contre le vent

(30) Priorität: 09.02.1993 CH 402/93
(43) Veröffentlichungstag der Anmeldung: 17.08.1994
(73) Patentinhaber: Mettler-Toledo GmbH, 8606 Greifensee (CH)
(72) Erfinder: Leisinger, Roger, CH-8050 Zürich (CH); Mattle, Bruno, CH-8610 Uster (CH)
(74) Vertreter: Patentanwälte Leinweber & Zimmermann

(56) Entgegenhaltungen:
- EP-A- 0 046 821
- EP-A- 0 282 400
- CH-A- 578 106
- DE-U- 8 907 396
- US-A- 3 250 585
- US-A- 3 498 207

## Beschreibung

Gegenstand der vorliegenden Erfindung ist eine oberschalige Präzisionswaage mit einem Windschutz aus mehreren, an den Kanten miteinander verbundenen Wänden und einem die von den Wänden oben gebildete Öffnung verschliessenden, an einem horizontal liegenden Scharnier schwenkbar befestigten Deckel.

Präzisionswaagen mit einem Windschutz der genannten Gattung sind bekannt. In der Schweizer Patentschrift 677 029 wird ein Windschutz beschrieben, dessen seitliche Wände an den Kanten durch Profilstäbe miteinander verbunden sind und der oben durch einen an einer der Seitenwände angelenkten Deckel verschliessbar ist. Der bekannte Windschutz liegt durch sein Eigengewicht auf dem Waagengehäuse auf und ist auf diesem nicht weiter befestigt. Der schwenkbare Deckel ist in einfacher Weise durch ein Scharnier mit der Rückwand des Windschutzes verbunden. Um eine optimale Einsicht in den Windschutz zu erlangen, sind sowohl die Seitenwände als auch der Deckel aus Glas gefertigt. Der nur wenig über die Seitenwände hinausragende, verhältnismässig schwere Glasdeckel, der bei jeder Beschickung der Waage geöffnet werden muss, kann bei einer unsachgemässen Behandlung oder aus Versehen der Hand der Bedienungsperson entgleiten und auf den Oberkanten der Seitenwände aufschlagen. Dabei besteht die Gefahr, dass der Glasdeckel zerbricht. Ein weiterer Nachteil dieses Windschutzes besteht darin, dass der Deckel ein verhältnismässig hohes Gewicht aufweist und daher bei Reihenwägungen das häufige Öffnen und Schliessen zu Ermüdungserscheinungen der Bedienungsperson führen kann.

Ein weiterer Nachteil des bekannten Windschutzes besteht darin, dass der Windschutz durch den hochgeschwenkten schweren Deckel vorn angehoben werden und im schlechtesten Fall von der Oberfläche der Waage nach hinten kippen kann.

Aus der US-A-3 250 585 sind Torsionsscharniere mit einstellbarer Entlastungskraft für empfindliche Geräte bekannt.

Die Aufgabe der vorliegenden Erfindung besteht darin, bei einer Waage der gattungsgemässen Art den Windschutz bedienungsfreundlicher zu gestalten, insbesondere ein sicheres und bruchfreies Öffnen und Schliessen des Deckels zu ermöglichen.

Gelöst wird die Aufgabe entsprechend Anspruch 1.

Die im Scharnier des Deckels eingesetzte Feder dämpft nicht nur den Aufschlag des Deckels auf die Oberkanten der Seitenwände, sondern sie trägt einen wesentlichen Teil des Deckelgewichtes, so dass dieser mühelos angehoben und gedämpft abgesenkt werden kann. Der Deckel wird folglich nicht nur gegen Bruch geschützt, sondern es kann gleichzeitig eine wesentliche Erleichterung für die Bedienungsperson erreicht werden. Mit einer an den beiden Enden gehaltenen Torsionsfeder werden das Scharnier bzw. die das Scharnier bildenden, mit dem Deckel und den Seitenwänden verbundenen Scharnierteile symmetrisch belastet. Die Torsionsfeder lässt sich auf sehr kleinem Raum innerhalb des Scharniers unterbringen, so dass die ästhetische Gestaltung des Scharniers durch die Feder nicht beeinträchtigt wird. Die Torsionsstabfeder kann bei der Montage ohne Vorspannung in den geöffneten Deckel eingelegt werden. Wird die Feder nur an den beiden Enden befestigt, d.h. das eine Ende drehfest mit dem Deckel und das andere drehfest mit der Seitenwand, so kann auf eine zentrale Haltevorrichtung verzichtet werden. Durch die Verwendung einer rechteckförmigen Feder, d.h. einer auf Torsion belasteten Blattfeder, kann die Befestigung durch einfaches Einschieben in schlitzförmigen Ausnehmungen an den das Drehlager bildenden Lagerbolzen erfolgen. Abgeflachte Abschnitte an den Lagerbolzen verhindern, dass diese sich im Scharnier drehen können. Mittels einer einfachen am feststehenden, mit der Seitenwand verbundenen Scharnierteil angeordneten Haltevorrichtung, nämlich einem geschlitzten Bügel, kann die Federkraft auf die Rückwand übertragen werden.

Bei der Verwendung einer wendelförmigen Feder kann diese ebenfalls ungespannt auf die Drehachse oder Welle des Scharniers aufgeschoben werden. Beim Schliessen des Deckels gelangen die beiden tangential abstehenden Federenden in Anlage mit dem Deckel und der Seitenwand. Eine besondere Führung der Feder ist nicht nötig.

Zur weiteren Verbesserung der Eigenschaften des Windschutzes kann dieser derart ausgebildet sein, dass er beim Öffnen des Deckels auf dem Waagengehäuse festgehalten wird.

Eine an der Unterseite des Rahmens des Windschutzes in eine nutförmige Ausnehmung eingelassene Feder rastet beim Aufsetzen des Windschutzes auf das Waagengehäuse selbsttätig an einer dort angebrachten Lasche oder Rippe bzw. an einer an der Rippe vorgesehenen Rille oder Stufe ein. Auch bei unsachgemässer Bedienung des Deckels kann der Windschutz nun nicht mehr nach hinten kippen. Er kann jedoch in einfacher Weise durch Anheben des rückwärtigen Teiles und eine geringe Schwenkung um die vordere Unterkante des Rahmens ohne Werkzeuge vom Waagengehäuse abgehoben werden. Der Windschutz kann, falls dessen Querschnitt quadratisch ist, auch um 90° gedreht auf das Waagengehäuse aufgesetzt und an den dort angebrachten Rippen oder Laschen eingerastet werden. Damit kann der Deckel seitlich aufgeschwenkt und die Bedienung, d.h. die Beschickung der Waagschale, von der Seite erfolgen. Die zum Einrasten des Windschutzes an dessen Rahmen angebrachte Feder besteht aus einem flachen Federstahl, dessen eines Ende mit dem Rahmen verbunden und dessen anderes Ende in einem spitzen Winkel in die nutförmige Ausnehmung am Rahmen hineinragend angeordnet ist.

Alternativ kann ein Stift vorgesehen sein, der die Nut im Rahmen horizontal durchdringt und quer zur letzteren liegt, welcher in einem geneigt zur Horizontalen angeordneten Schlitz eingreift.

Anhand illustrierter Ausführungsbeispiele wird die Erfindung näher erläutert. Es zeigen:
- Figur 1: eine perspektivische Darstellung einer oberschaligen Waage mit einem aufgesetzten Windschutz,
- Figur 2: eine Ansicht des Scharniers bei geöffnetem Deckel von unten,
- Figur 3: eine Ansicht des Scharnieres bei geschlossenem Deckel,
- Figur 4: einen Querschnitt durch die Rückwand und den Deckel sowie das Scharnier längs Linie IV - IV in Figur 2,
- Figur 5: einen Querschnitt durch die Rückwand und den Deckel sowie das Scharnier längs Linie V - V in Figur 3,
- Figur 6: eine perspektivische Aufsicht auf die Oberfläche der Waage,
- Figur 7: einen Querschnitt durch den Rahmen des Windschutzes im Bereich der Rastfeder,
- Figur 8: einen Querschnitt durch den Rahmen des Windschutzes mit einer alternativen Rastvorrichtung für den Windschutz,
- Figur 9: einen Querschnitt durch das Scharnier mit einer alternativen Ausgestaltung der Feder.

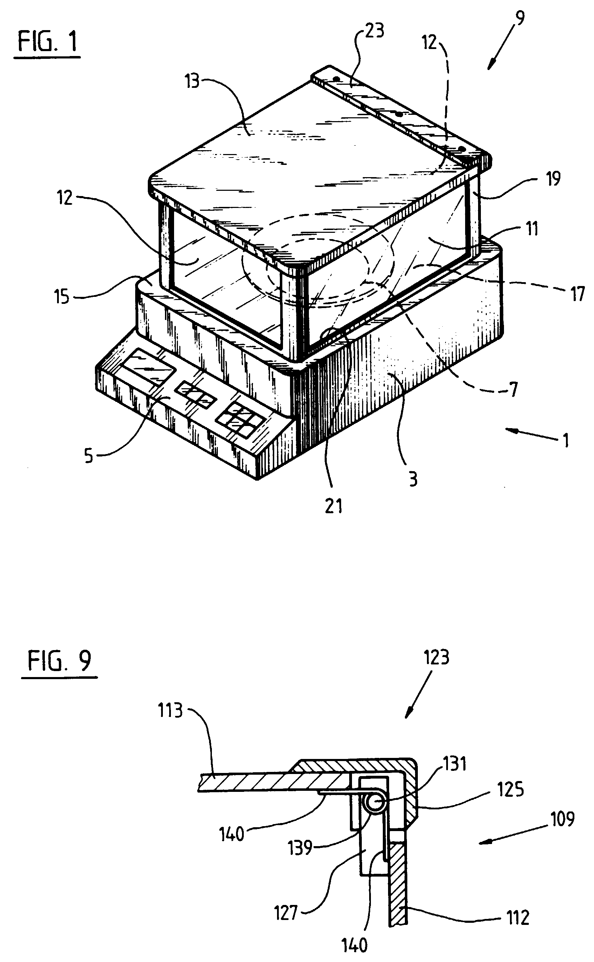

Auf einer oberschaligen Präzisionswaage 1, von der in der perspektivischen Darstellung gemäss Figur 1 das Gehäuse 3, die Anzeige- und Bedienungseinrichtung 5 sowie in gebrochenen Linien die Waagschale 7 dargestellt ist, ist ein Windschutz 9 aufgesetzt, der aus zwei Seitenwänden 11 und je einer Vorder- sowie Rückwand 12 und einem Deckel 13 besteht. Der Windschutz 9 kann direkt auf der Oberseite 15 des Waagengehäuses 3 aufgelegt oder auf einer Halteplatte 17, die am Gehäuse 3 befestigt ist, aufgesetzt sein. Durch die Halteplatte 17 wird der Windschutz 9 auf der Oberseite des Waagengehäuses 3 positioniert gehalten.

Die vier Wände 11, 12 des Windschutzes 9 sind an ihren vertikalen Kanten durch Führungsprofile 19 miteinander verbunden. Die Profile 19 sind an den Ecken eines rechteckigen, den Windschutz 9 unten abschliessenden Rahmens 21 befestigt. Sowohl an den Führungsprofilen 19 als auch am Rahmen 21 sind Führungsnuten zur Aufnahme der Kanten der vorzugsweise aus Glas bestehenden Wände 11, 12 eingelassen.

Der Deckel 13 ist durch ein Scharnier 23 mit der Rückwand 12 schwenkbar verbunden. Das Scharnier 23 weist einen Schwenkteil 25 auf, der mit dem Deckel 13 verbunden ist, und einen Halteteil 27, welcher mit der Rückwand 12 verbunden ist. Am Schwenkteil 25 sind im Bereich von dessen Enden Lagerböcke 29 vorgesehen, welche je einen Lagerbolzen 31 tragen. Die Lagerböcke 29 sind, wenn das Scharnier 23 aus Kunststoff hergestellt ist, vorzugsweise kastenförmig ausgebildet, derart, dass die Lagerbolzen 31 an zwei Stellen abgestützt werden. Auf der nach aussen gerichteten Seite der Lagerböcke 29 sind vorzugsweise paarweise Rippen 33 angespritzt, welche die Lagerbolzen 31, deren Köpfe 35 Flachstellen aufweisen, drehfest halten.

Die vorderen Enden der Lagerbolzen 31 durchdringen die seitlichen Abschlusswände 37 des kastenförmig ausgebildeten Halteteils 27 und weisen Mittel zum drehfesten Halten einer Torsionsfeder 39 auf, die zwischen den beiden Lagerbolzen 31 eingesetzt ist. Wenn die Torsionsfeder 39 die Gestalt einer Blattfeder aufweist, so bestehen die Aufnahmemittel in den Lagerbolzen 31 aus schlitzförmigen Ausnehmungen 41. Zwischen den seitlichen Abschlusswänden 37 zur Aufnahme der Enden der Lagerbolzen 31 ist am Halteteil 27 ein Bügel 43 mittels einer Schraube oder einer Niete 45 befestigt. In den beiden Schenkeln des Bügels 43 sind Schlitze zum Hindurchführen der Torsionsfeder 39 eingelassen.

Der Deckel 13 ist mit Schrauben oder Nieten 47, durch Kleben oder durch Verschweissen mit dem Schwenkteil 25 fest verbunden. Die Rückwand 12 ist mit Schrauben 49 am Halteteil 27 befestigt.

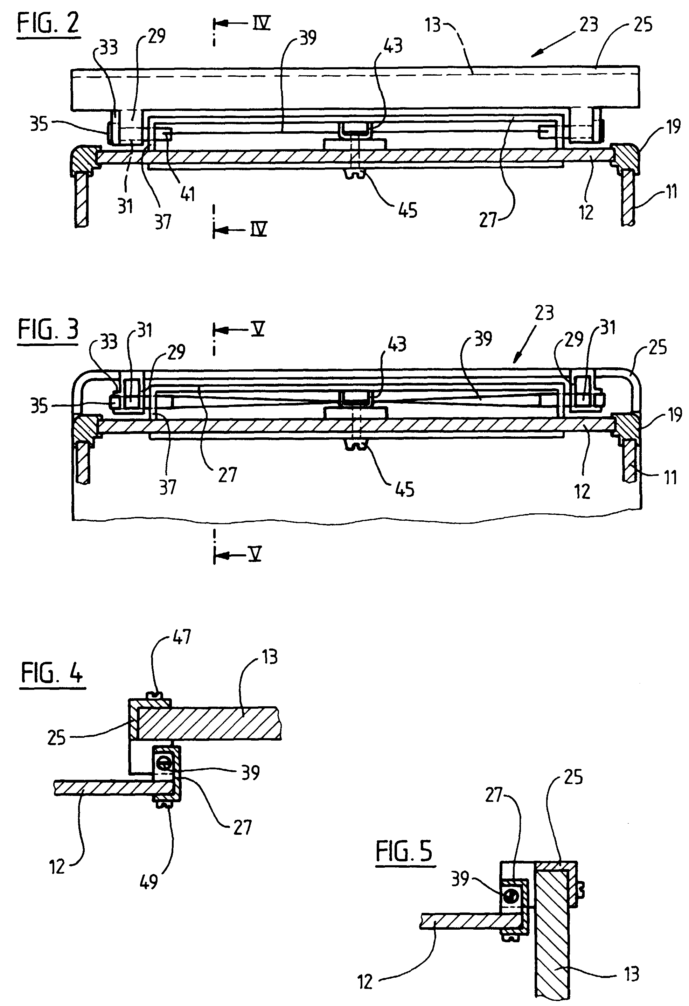

Im folgenden wird die Funktionsweise des Scharniers 23 erläutert. Bei geöffnetem Deckel 13, d.h. wenn dieser in vertikaler Stellung verharrt, ist die Torsionsfeder 39 ungespannt, d.h. sie liegt in der in Figur 2 dargestellten Lage lose in den schlitzförmigen Ausnehmungen 41 an den Lagerbolzen 31 und durchdringt die Schlitze im Bügel 43, ohne auf den Bügel eine Kraft auszuüben. Der Deckel 13 verharrt in dieser Stellung, weil sein Schwerpunkt hinter der Rückwand 12, welche den Deckel 13 trägt, liegt. Sobald nun der Deckel 13 nach vorne über die obenliegende Öffnung des Windschutzes 9 geschwenkt wird, werden über die sich mitdrehenden Lagerbolzen 31 die Enden der Torsionsfeder 39 verdreht und so eine Torsionskraft in die Torsionsfeder 39 eingeleitet. Mit zunehmendem Schwenkwinkel erhöht sich folglich auch der Torsionswiderstand bzw. die Torsionskraft in der Feder 39 und dämpft auf diese Weise durch zunehmende Kompensation des Deckelgewichtes den Aufschlag auf die Wände 11 und 12.

Selbstverständlich kann die Torsionsfeder 39 durch ein Verdrehen der Lagerbolzen 31 bei der Montage vorgespannt werden, so dass sich deren auf den Deckel 13 wirkende Rückstellkraft erhöht.

Alternativ zur Verwendung einer Torsionsfeder 39 kann in einer weiteren Ausgestaltung gemäss Figur 9 im Scharnier 123 eine wendelförmige Feder 139 auf den Lagerbolzen 131 aufgeschoben sein, deren tangential abstehende Federenden 140 auf der Innenseite des Deckels 113 bzw. der Rückwand 121 aufzuliegen kommen. Das Scharnier 123 besteht, wie bei der erst beschriebenen Ausführungsform, aus einem Schwenkteil 125, der den Deckel 113 trägt und einem Halteteil 127, der fest mit der Rückwand 112 verbunden ist.

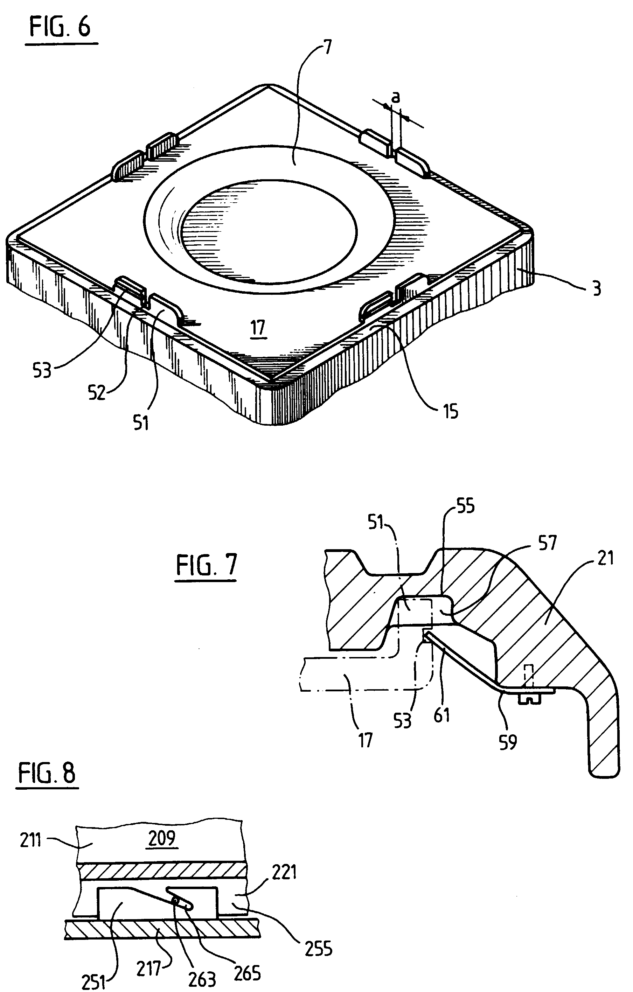

In Figur 6 ist auf die Oberseite 15 des Waagengehäuses 3 eine Halteplatte 17 aufgelegt und durch nicht dargestellte Mittel mit dem Waagengehäuse 3 fest verbunden. An den Kanten der Halteplatte 17 sind vertikal von letzterer nach oben abstehende Rippen- oder Laschenpaare 51 angebracht. Die Laschenpaare 51 liegen unter Bildung eines Schlitzes 52 in einem gegenseitigen Abstand a. Auf der Aussenseite mindestens einer Lasche des Laschenpaares 51 ist eine Rille, Kerbe oder Stufe 53 eingelassen.

Auf der Unterseite des Rahmens 21 des Windschutzes 9 ist eine Nut oder eine nutförmige Ausnehmung 55 angebracht, welche bei aufgesetztem Windschutz 9 die an der Halteplatte 17 angebrachten Laschenpaare 51 aufnehmen kann. Zur Positionierung des Windschutzes 9 auf der Halteplatte 17 sind in den Nuten 55 die Nutwände überbrückende Stege 57 angebracht, die dazu bestimmt sind, zwischen die Laschenpaare 51 einzugreifen. Die Stege 57 sind derart bemessen, dass sie mit geringem Spiel in die Schlitze 52 zwischen den Laschenpaaren 51 zu liegen kommen.

Auf der dem Scharnier 23 gegenüberliegenden Vorderseite des Windschutzes 9 ist seitlich des dort in der Ausnehmung 55 angebrachten Steges 57 eine Rastfeder 59 befestigt, deren vorderes Ende 61 in die Nut 53 hineinragt. Der vordere Abschnitt der Feder ist geneigt zur Vertikalen angeordnet, so dass er beim Aufsetzten des Windschutzes 9 auf die Halteplatte 17 von der in die Ausnehmung 55 einfahrenden Lasche 51 zurückgedrängt wird, bis das vordere Ende 61 der Feder 59 in die Rille 53 einschnappt. Das Einschnappen erfolgt etwa in dem Moment, wo der Windschutz 9 auf die Halteplatte 17 bzw. die Oberfläche 15 des Waagengehäuses 3 aufgesetzt ist. Nach dem Einrasten der Feder 59 an der Rille 53 kann der Windschutz 9 vorne nicht mehr spontan abheben. Ein Kippen des Windschutzes 9 beim Öffnen des Deckels 13 ist folglich nicht mehr möglich.

Zum Abheben des Windschutzes 9 vom Waagengehäuse 3 muss der Windschutz 9 auf der Rückseite leicht angehoben werden, derart, dass die Feder 59 durch das Verschwenken des Windschutzes 9 aus der Rille 3 herausgeführt wird. Danach kann der Windschutz 9 vom Gehäuse 3 abgehoben werden.

In der Ausgestaltung der Verriegelungsvorrichtung für den Windschutz 209 auf dem Waagengehäuse 203 gemäss Figur 8 tritt anstelle der Rastfeder 259 ein in der Nut 255 eingelassener, die beiden Nutwände überbrückender Stift 263. Dieser greift in einen geneigt zur Horizontalen verlaufenden Schlitz 265 in den Laschen 251 ein. Die schlitzförmigen Laschen 251 treten anstelle der Laschenpaare 51 in Figur 6 und sind auf der Halteplatte 217 befestigt.

Das Aufsetzen des Windschutzes 209 auf das Waagengehäuse 203 wird wie folgt vorgenommen. Der Windschutz 209 wird von oben auf die Laschen 251 abgesetzt und gleitet danach auf der schrägen Bahn der Schlitze 265 nach unten. Sobald der Windschutz 209 auf dem Waagengehäuse 203 aufliegt, kann er auf der Bedienerseite nicht mehr spontan abheben.

Zum gewollten Abheben wird der Windschutz so lange unter leichtem Anheben nach vorne geschoben, bis die Verbindung Stift 263 / Schlitz 265 aufgehoben ist.

## Patentansprüche

1. Oberschalige Präzisionswaage mit einem auf die Oberseite (15) des Waagengehäuses (3) aufgesetzten Windschutz aus mehreren, an den Kanten miteinander verbundenen Wänden und einem die von den Wänden oben gebildete Oeffnung verschliessenden, an einem horizontal liegenden Scharnier schwenkbar befestigten Deckel, dadurch gekennzeichnet, dass im Scharnier (23, 123) eine der Schliessbewegungsrichtung des Deckels (13, 113) entgegengesetzt wirkende Feder (39, 139) eingesetzt ist, wobei die maximale Federkraft kleiner ist als die zum Anheben des Deckels notwendige Kraft.

2. Waage nach Anspruch 1, dadurch gekennzeichnet, dass als Feder (39) im Scharnier (23) ein Torsionsstab eingesetzt ist, dessen beide Enden drehfest am feststehenden, an einer Wand (12) befestigten Halteteil (27) des Scharniers (23) gehalten sind und bei dem der am Deckel (13) befestigte Schwenkteil (25) des Scharniers (23) zwischen den Enden mit dem Torsionsstab drehfest verbunden ist.

3. Waage nach Anspruch 1, dadurch gekennzeichnet, dass als Feder (39) im Scharnier ein Torsionsstab eingesetzt ist, dessen erstes Ende drehfest am feststehenden, an einer Wand (12) befestigten Halteteil (27) des Scharniers (23) gehalten ist und dessen zweites Ende am schwenkbaren, am Deckel (13) befestigten Teil (25) des Scharniers (23) drehfest gehalten ist.

4. Waage nach einem der Ansprüche 2 oder 3, dadurch gekennzeichnet, dass die Feder (39) einen rechteckigen oder einen runden Querschnitt aufweist.

5. Waage nach einem der Ansprüche 2 bis 4, dadurch gekennzeichnet, dass das Scharnier (23, 123) zwei am schwenkbaren Teil (25) angeordnete Lagerböcke (29) mit je einem daran drehfest gehaltenen Lagerbolzen (31, 131) aufweist, und dass am feststehenden Teil (27) zwei beabstandete Haltemittel zur Aufnahme der vorderen Enden der Lagerbolzen (21, 121) befestigt sind.

6. Waage nach Anspruch 2, dadurch gekennzeichnet, dass die Enden der Feder (39) in dem Lagerbolzen (31) drehfest gehalten sind und dass der zentrale Abschnitt der Feder (39) drehfest mit dem Deckel (13) verbunden ist.

7. Waage nach Anspruch 1, dadurch gekennzeichnet, dass auf einer die Drehachse des Scharniers (123) bildende Welle (131) mindestens eine wendelförmige Feder (139) aufgeschoben ist, deren tangential abstehende, in einem Winkel zueinander liegende Enden (140) je an einer der Wände (112) und am Deckel (113) anliegend angeordnet sind.

8. Waage nach einem der Ansprüche 1 bis 7, dadurch gekennzeichnet, dass die Unterkanten der den Windschutz (9, 109) seitlich abschliessenden Seitenwände (11, 111) in einem Rahmen (21) eingesetzt sind, an dessen Unterseite mindestens eine nutförmige Ausnehmung oder eine Nut (55) eingelassen ist, in welche auf dem Waagengehäuse (3) angebrachte Laschen (51) eingreifen, und dass an den Laschen (51) eine horizontal verlaufende Rille oder Stufe (53) eingelassen ist, an der eine an der Unterseite des Rahmens (21) befestigte, in die Nut (55) hineinragende Rastfeder (59) beim Aufsetzen des Windschutzes (9) auf das Waagengehäuse (3) einrastbar eingreift.

9. Waage nach Anspruch 8, dadurch gekennzeichnet, dass der in die Nut (55) hineinragende Teil der Rastfeder (59) in einem spitzen Winkel zur Vertikalen verläuft und gegen das Zentrum des Windschutzes (9) ausgerichtet am Rahmen (21) befestigt ist.

10. Waage nach einem der Ansprüche 8 oder 9, dadurch gekennzeichnet, dass die Rastfeder (59) auf der dem Scharnier (23) für den Deckel (13) gegenüberliegenden Seite des Rahmens (21) angeordnet ist.

11. Waage nach einem der Ansprüche 1 bis 7, dadurch gekennzeichnet, dass die Unterkanten der den Windschutz (209) bildenden seitlichen Wände (211) in einen Rahmen (221) eingesetzt sind, an dessen Unterseite eine Nut (255) eingelassen ist, in welche auf dem Waagengehäuse (203) angebrachte Laschen (251) eingreifen, und dass in den Laschen (251) geneigt zur Vertikalen verlaufende Schlitze (265) angebracht sind, in die in der Nut (255) eingesetzte Stifte (263) bei aufgesetztem Windschutz (209) eingreifen.

## Claims

1. A top-pan precision balance having a draught-proofing arrangement Which is fitted onto the top side (15) of the balance housing (3) and which comprises a plurality of walls connected together at the edges and a cover Which is pivotably fixed to a horizontally disposed hinge and which closes the opening formed at the top by the walls, characterised in that a spring (39, 139) Which acts in opposite relationship to the direction of closing movement of the cover (13, 113) is fitted in the hinge (23, 123), the maximum spring force being lower than the force required to lift the cover.

2. A balance according to claim 1 characterised in that the spring (39) fitted in the hinge (23) is in the form of a torsion bar whose two ends are held non-rotatably to the fixed holding member (27) of the hinge (23), Which is secured to a wall (12), and in which the pivotal member (12) of the hinge (23), which is secured to the cover (13), is non-rotatably connected to the torsion bar between the ends.

3. A balance according to claim 1 characterised in that the spring (39) fitted in the hinge is in the form of a torsion bar whose first end is non-rotatably held to the fixed holding member (27) of the hinge (23), which is secured to a wall (12), and whose second end is non-rotatably held to the pivotable member (25) of the hinge (23), which is secured to the cover (13).

4. A balance according to one of claims 2 and 3 characterised in that the spring (39) is of a rectangular or a round cross-section.

5. A balance according to one of claims 2 to 4 characterised in that the hinge (23, 123) has two mounting blocks (29) arranged on the pivotable member (25), each having a respective mounting pin (31, 131) non-rotatably held thereto, and that two spaced-apart holding means for receiving the front ends of the mounting pins (31, 131) are secured to the fixed member (27).

6. A balance according to claim 2 characterised in that the ends of the springs (39) are non-rotatably held in the mounting pin (31) and that the central portion of the spring (39) is non-rotatably connected to the cover (13).

7. A balance according to claim 1 characterised in that at least one coil spring (139) is pushed onto a shaft (131) forming the axis of rotation of the hinge (123), the tangentially projecting ends (140) of the spring, which are disposed at an angle relative to each other, each being arranged to bear against one of the walls (112) and the cover (113) respectively.

8. A balance according to one of claims 1 to 7 characterised in that the lower edges of the side walls (11, 111) Which laterally close off the draught-proofing arrangement (9, 109) are fitted in a frame (21), at the underside of which is provided at least one groove-like recess or a groove (55) into which plate portions (51) on the balance housing (3) engage, and that provided on the plate portions (51) is a horizontally extending channel or step (53) Which is latchably engaged by a retaining spring (59) secured to the underside of the frame (21) and projecting into the groove (55), when the draught-proofing arrangement (9) is fitted onto the balance housing (3).

9. A balance according to claim 8 characterised in that the portion of the retaining spring (59), which projects into the groove (55), extends at an acute angle relative to the vertical and is secured to the frame (21) in a position of being oriented towards the centre of the draught-proofing arrangement (9).

10. A balance according to one of claims 8 and 9 characterised in that the retaining spring (59) is arranged on the side of the frame (21) opposite the hinge (23) for the cover (13).

11. A balance according to one of claims 1 to 7 characterised in that the lower edges of the lateral walls (211) forming the draught-proofing arrangement (209) are fitted into a frame (221), at the underside of Which is provided a groove (255) into Which plate portions (251) on the balance housing (203) engage, and that provided in the plate portions (251) are slots (265) Which extend inclinedly relative to the vertical and into which pins (263) fitted in the groove (255) engage when the draught-proofing arrangement (209) is put on.

## Revendications

1. Balance de précision à plateau supérieur, comprenant une protection contre le vent posée sur le côté supérieur (15) du boîtier (3) de la balance et formée de plusieurs parois reliées les unes aux autres le long de leurs bords et d'un couvercle qui obture l'ouverture formée au haut par les parois et qui est fixé pivotant sur une charnière horizontale, caractérisée en ce qu'un ressort (39, 139) agissant dans le sens opposé au sens du mouvement de fermeture du couvercle (13, 113) est monté dans la charnière (23, 123), la force maximale du ressort étant inférieure à la force nécessaire à relever le couvercle.

2. Balance selon la revendication 1, caractérisée en ce que le ressort (39) utilisé dans la charnière (23) est une barre de torsion dont les deux extrémités sont tenues immobiles en rotation sur la partie fixe (27) de montage de la charnière (23) qui est assujettie à une paroi (12) et en ce que la partie pivotante (25) de la charnière (23) qui est fixée au couvercle (13) est solidarisée en rotation entre ses extrémités avec la barre de torsion.

3. Balance selon la revendication 1, caractérisée en ce que le ressort (39) utilisé dans la charnière est une barre de torsion, dont la première extrémité est tenue immobile en rotation sur la partie fixe (27) de montage de la charnière (23) qui est assujettie à une paroi (12), et dont la seconde extrémité est tenue immobile en rotation dans la partie pivotante (25) de la charnière (23) qui est fixée au couvercle (13).

4. Balance selon l'une des revendications 2 ou 3, caractérisée en ce que le ressort (39) est rectangulaire ou rond en coupe transversale.

5. Balance selon l'une des revendications 2 à 4, caractérisée en ce que la charnière (23, 123) comprend deux supports (29) qui sont placés sur la partie pivotante (25) et dont chacun comporte une tige de support (31, 131) avec laquelle il est solidarisé en rotation, et en ce que deux moyens de montage placés à distance l'un de l'autre et destinés à loger l'extrémité antérieure des tiges de support (31, 131) sont assujettis à la partie fixe (27).

6. Balance selon la revendication 2, caractérisée en ce que les extrémités du ressort (39) sont tenues immobiles en rotation dans la tige de support (31) et en ce que la partie centrale du ressort (39) est solidarisée en rotation avec le couvercle (13).

7. Balance selon la revendication 1, caractérisée en ce qu'au moins un ressort hélicoïdal (139), dont les extrémités (140) sont saillantes tangentiellement et inscrivent un angle l'une avec l'autre et qui sont disposées de manière à être en appui, l'une contre l'une des parois (112) et l'autre contre le couvercle (113), est enfilé sur un arbre (131) formant l'axe de rotation de la charnière (123).

8. Balance selon l'une des revendications 1 à 7, caractérisée en ce que le bord inférieur des parois latérales (11, 111) qui cloisonnent latéralement la protection contre le vent (9, 109) est logé dans un châssis (21) sur le côté inférieur duquel est réalisée au moins une cavité en forme de gorge ou une gorge (55) dans laquelle pénètrent des languettes (51) placées sur le boîtier (3) de la balance, et en ce que les languettes (51) comportent une rainure ou un épaulement (53) qui est horizontal et dans lequel pénètre en s'enclenchant un ressort d'encliquetage (59) fixé sur le côté inférieur du châssis (21) et pénétrant dans la gorge (55) lors de la pose de la protection contre le vent (9) sur le boîtier (3) de la balance.

9. Balance selon la revendication 8, caractérisée en ce que la partie du ressort d'encliquetage (59) qui pénètre dans la gorge (55) inscrit un angle aigu avec la verticale et est fixée au châssis (21) de manière à être orientée vers le centre de la protection contre le vent (9).

10. Balance selon l'une des revendications 8 ou 9, caractérisée en ce que le ressort d'encliquetage (59) est disposé sur le côté du châssis (21) qui est à l'opposé de la charnière (23) du couvercle (13).

11. Balance selon l'une des revendications 1 à 7, caractérisée en ce que le bord inférieur des parois latérales (211) formant la protection contre le vent (209) est logé dans un châssis (221) sur le côté inférieur duquel est réalisée une gorge (255) dans laquelle pénètrent des languettes (251) placées sur le boîtier (203) de la balance, et en ce que les languettes (251) comportent des fentes (265) inclinées sur la verticale et dans lesquelles pénètrent des tiges (263), qui sont montées dans la gorge (255), lors de la pose de la protection contre le vent (209).
